# EUROPÄISCHE PATENTSCHRIFT

(11) **EP 1 111 813 B1**
(45) Veröffentlichungstag und Bekanntmachung des Hinweises auf die Patenterteilung: **01.09.2010**
(21) Anmeldenummer: 00126531.3
(22) Anmeldetag: 11.12.2000
(51) Int. Cl.: H04B 7/185

(54) **Vorrichtung zur Übertragung von Telemetriedaten**
Device for transmission of Telemetrie Data
Dispositif de transmission de données de télémétrie

(30) Priorität: 23.12.1999 DE 19962320
(43) Veröffentlichungstag der Anmeldung: 27.06.2001
(73) Patentinhaber: EADS Deutschland GmbH, 81663 München (DE)
(72) Erfinder: Neuburger, Max, 85053 Ingolstadt (DE); Ernst, Wolfgang, 91795 Dollnstein (DE)

(56) Entgegenhaltungen:
- DE-A1- 4 316 225

## Beschreibung

Die Erfindung betrifft eine Vorrichtung zur Übertragung von Telemetriedaten, d.h. von Realzeitsystemen kommenden seriellen, synchron getakteten Daten, zur Beobachtung der übertragenen Daten am Ausgang der Übertragungsleitung in Realzeit.

Aus dem allgemeinen Stand der Technik sind Übertragungseinrichtungen zu Beobachtung von Realzeitsystemen bekannt, die in der Realzeitsystemen erzeugten Daten per Funk zu einer Bodenstation übertragen, in der die Abläufe in diesen Realzeitsystemen online beobachtet und überwacht werden können. Beispielsweise werden solche Übertragungs-Einrichtungen bei der Erprobung von Flugzeugen verwendet. Dabei sind Flugversuchsträger mit einer entsprechenden Sensorik und zugehörigen Rechensystemen ausgerüstet, die serielle und kontinuierlich getaktete Daten, das heißt einen seriellen, synchron getakteten Datenstrom, per Funk auf eine Bodenstation übertragen. Diese Versuchsdaten werden mit einem derart geringen Zeitverzug zur Bodenstation übermittelt, daß in dieser die Systemzustände in dem Flugversuchsträger quasi zeitgleich beobachtet und überwacht werden können. Üblicherweise werden die ankommenden Versuchsdaten in dort verfügbaren Auswerteeinheiten analysiert, so daß teilweise auch eine online-Bewertung der Versuchtsdaten erfolgen kann. ÜbertragungsSysteme dieser Art werden beispielsweise auch zur Überwachung von Automobilen, insbesondere von Rennautos, angewendet.

Der Nachteil einer Übertragung von Daten über die Funkstrecke ist, daß dies nur im Telemetrie-Empfangsbereich der Bodenstations-Antenne möglich ist. Für Erprobungs-Einsätze in entfernten Test-Areas mußte deswegen eine andere Möglichkeit gefunden werden um die Meßdaten zur zentralen Bodenstation zu übertragen.

DE-A-43 16 225 wird als nächstliegender Stand der Technik angesehen und beschreibt eine Tacktrückgewinnung beim Empfang von Datensignalen.

Es ist daher die Aufgabe der Erfindung, eine Vorrichtung zur Übertragung von seriellen, synchron getakteten Daten zu schaffen, die in vorbestimmten Maße zuverlässig und insgesamt sicher sowie störungsfrei ist und die eine kostengünstige Übertragung in entfernte Test-Gebiete erlaubt, um dort eine Realzeit-Analyse der Daten vorzunehmen.

Diese Aufgabe wird mit den Merkmalen der unabhängigen Ansprüche gelöst. Weitere Ausführungsformen sind in den Unteransprüchen beschrieben.

Erfindungsgemäß wird ein Standard-Übertragungssystem wie das bestehende ISDN-Netz, mit denen Daten asynchron übertragen werden, für die Übertragung von in synchron getakteter Form vorliegenden Realzeitdaten verwendet. Um die seriellen Realzeitdaten in ein geeignetes Format zu bringen, damit sie über ein entsprechendes Modem auf das Standard-Übertragungssystem gebracht werden können, ist erfindungsgemäß ein Konverter vorgesehen. In einer Bodenstation, die die asynchronen Daten von dem Standard-Übertragungssystem empfängt, ist ein Modem sowie ein Re-Konverter vorgesehen, der die asynchronen Daten wiederum in synchron getaktete umwandelt.

Ein Vorteil der Erfindung ist, daß das zu überwachende Realzeitsystem sehr weit von der eigentlichen Überwachungstation bzw. Auswerteeinheit enfernt sein kann. Beispielsweise beim Flugversuch kann der zu erfassende Datenstrom zunächst auf eine mit einfachsten Mitteln ausgestattete Empfangsstation im Bereich des Flugversuchs gesendet werden. Von dort können die Daten dann auf das Standard-Übertragungssystem, z.B. das ISDN-Netz gebracht und an eine zentrale Auswertestation gesendet werden. In analoger Weise können Daten von anders gearteten Realzeit-Systemen, zum Beispiel Systeme zur Überwachung und analyse von Automobilen, zu fernliegenden Stationen übermittelt werden. Ein Vorteil der Erfindung liegt auch darin, daß Standard-Übertragungssysteme und insbesondere ISDN-Leitungen eine vorbekannte Übertragungssicherheit bieten, die somit auch für die Übertragung der erfindungsgemäßen Realzeit-Daten gewährleistet ist.

Auch ist kein kostenaufwendiger Transfer von Auswerte-Einheiten und Analyse-Personal zu den Test-Einsatzorten nötig. An den Test-Einsatzorten reicht eine Minimal-Ausrüstung um die Daten vom Erprobungsträger zu empfangen,mit dem Konverter zu formatieren und über das Standard-Übertragungssystem, und insbesondere das ISDN Netz an die Bodenstation weiterzuleiten. Bei ausländischen Test-Orten können auch Satelliten-Verbindungen genutzt werden. Bei zusätzlichem Einsatz von Relais-Stationen kann der Empfangsbereich von Testdaten mit diesem Verfahren noch weiter vergrößert werden.

Im folgenden wird die Erfindung an Hand der beiliegenden Figuren beschrieben. Es zeigen:
- Figur 1 eine schematische Darstellung der erfindungsgemäßen Vorrichtung zur die Übertragung oder auch Auswertung von Flugversuchs-Daten mit einer ersten, mit einem Empfänger für Telemetrie-Daten vorgesehenen und einer zweiten, mit dieser über eine Standard-Übertragungsleitung gekoppelten Bodenstation,
- Figur 2 eine alternative Darstellung der erfindungsgemäßen Vorrichtung nach der Figur 1, wobei jedoch der ersten Bodenstation zusätzlich ein Auswertesystem zugeordnet ist,
- Figur 3 eine funktionale Darstellung des erfindungsgemäßen Konverters, der in der ersten Bodenstation vorgesehen ist, um die über eine Standard-Datenleitung zu versendenden Daten in ein für diese Datenübertragung geeignetes Format zu bringen, und
- Figur 4 eine Darstellung des erfindungsgemäßen Re-Konverters, der in der zweiten Bodenstation vorgesehen ist, um die über die Standard-Datenleitung versendeten Daten in ein zu deren Weiterverarbeitung geeignetes Format umzuwandeln.

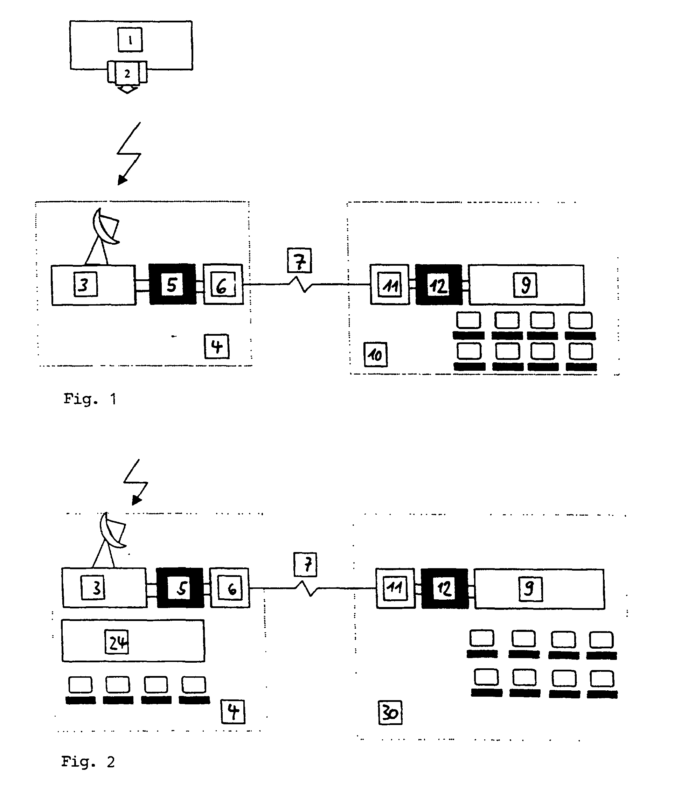

Figur 1 beschreibt die erfindungsgemäße Datenübertragungs-Einrichtung zur Übertragung von Telemetrie-Daten, die üblicherweise als synchron getaktete Daten vorliegen, über Standard-Datenleitungen. Dabei sendet ein Flugzeug 1 mittels eines Telemetrie-Senders 2 über Funk Daten im PCM-Format an ein Empfangs-System 3 einer ersten stationären oder mobilen Bodenstation 4. In der Bodenstation 4 ist ein Konverter 5 vorgesehen, der insbesondere ein PCM-Konverter ist und der die seriellen Daten aus dem Empfangs-System 3 in ein Format bringt, in dem diese über ein Modem 6 in eine Standard-Datenleitung 7, insbesondere das ISDN-Netz, eingespeist werden können. In einer zweiten oder zentralen Bodenstation 10 werden die Daten über ein zweites Modem 11 und einen Re-Konverter 13 in das serielle PCM-Format zur Weiterverarbeitung in der zentralen Bodenstation 10 umgewandelt.

Figur 2 zeigt einen weiteren Anwendungsfall der erfindungsgemäßen Anwendung. Der von dem Realzeitsystem kommende Datenstrom wird im Empfangsteil 23 empfangen und im anschließenden Auswerte-System 24 geordnet, strukturiert und überwacht. Hierzu können die Daten auf Monitoren dargestellt werden. Parallel zur Auswertung der Daten im Auswerte-System 24 werden die Daten ebenfalls über den Konverter 5, das Modem 6 und über das Standard-Übertragungssystem 7 und insbesondere das ISDN-Netz zu einer zentralen Bodenstation 30 zur gleichzeitigen Echtzeitüberwachung des Testablaufs übertragen.

Über Standard-Übertragungssysteme 7 und insbesondere das ISDN-Netz können Daten standardmäßig nur paketweise und nicht-synchron übertragen werden. Von den zu testenden oder zu überwachenden Realzeitsystemen, also z.B. von einem instrumentierten FlugversuchsTräger 1 mit der Telemetrie-Einrichtung 2, werden jedoch nur kontinuierliche Daten, das heißt synchron getaktete Datenströme, an das Empfangs-System 3, 23 gesendet. Der Konverter 5 formatiert den kontinuierlichen Datenstrom in die für die ISDN-Übertragung und insbesondere die ISDN-Übertragung vorgesehenen Pakete, ohne daß dabei Information verloren gehen.

Dabei wandelt der Konverter die seriell anliegenden Echtzeit-Daten (mit Daten und Taktzeit) vorzugsweise in ein für das Standard-Übertragungssystem erforderliches Schnittstellenformat und beispielsweise in das X.21-Protokoll um. Letzteres ist bei vielen Standard-Modems als Eingangs-Format vorhanden. Die anschließende Übertragung der Daten über ein Telekommunikationsnetz erfolgt paketweise. An der zweiten Bodensstation 10 findet mit dem gleichen Verfahren eine Re-Konvertierung aus dem Übertragungs-Protokoll, im Beipiel aus dem X.21-Protokoll, statt. Allgemein handelt es sich bei dem zu wählenden Protokoll um ein mit Standard-Übertragungseinrichtungen verträgliches Format.

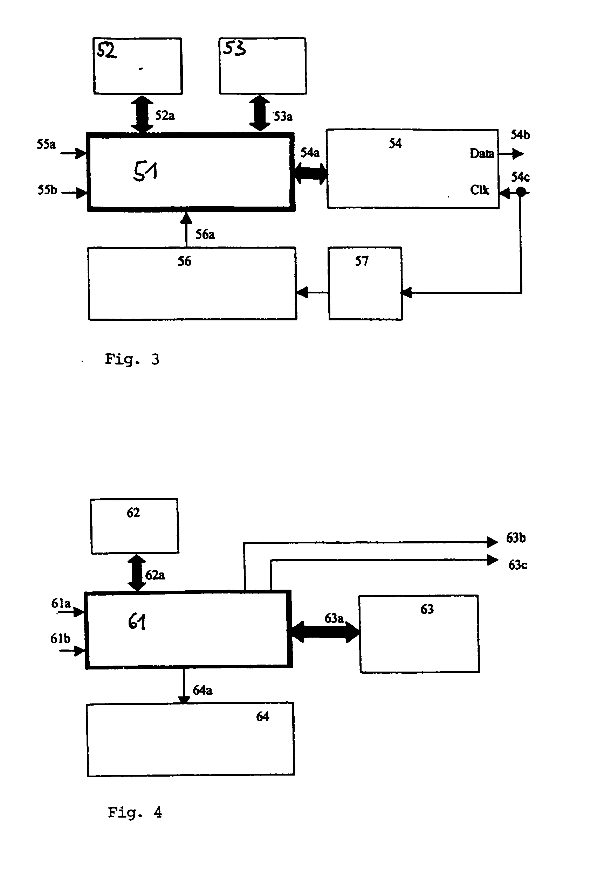

Der in der ersten Bodenstation vorgesehene Konverter 5 ist mit seinen wesentlichen Bestandteilen in der Figur 3 dargestellt. Der Konverter 5 umfasst einen Controller 51, eine erste Speichereinheit oder einen ersten Speicher 52, der als FIFO gestaltet ist, d.h. als ein Modul, das die Abarbeitung der Daten nach dem Prinzip First-in-first-out durchführt, und der mit dem Controller 51 über eine Verbindung 52a mit Daten und Control-Signalen und eine zwiete Speichereinheit oder einen zweiten Speicher 53, der ebenfalls als FIFO gestaltet ist und über eine Verbindung 53a zur Übertragung von Daten und Control-Signalen mit dem Controller 51 verbunden ist. Weiterhin umfaßt der Controller 51 einen Framer odereine Framing-Einrichtung 54, der bzw. die mit dem Controller 51 über eine Verbindung für Daten und Control-Signale 54a verbunden ist. An den Framer 54 ist weiterhin zum Modem 6 führende Leitung 54b sowie eine für vom Modem 6 kommende Zeitimpulse vorgesehene Leitung 54c angekoppelt. Der Controller 51 ist mit dem Empfangs-System über eine Datenleitung 55a und eine Zeitsignal-Leitung 55b verbunden.

Im Konverter 5 kann zusätzlich ein Simulator 56 integriert sein, der mit dem Controller 51 über eine Datenleitung 56a verbunden ist. Die Taktfrequenz des Simulators wird durch den Teiler 57 bestimmt, der die eingehende Modem-Clock-Frequenz 54c beispielsweise halbiert.

Der Controller 51 empfängt vom Empfangs-System 3, 23 über die Datenleitung 55a Daten in einem vorbestimmten Format. Dieses vorbestimmte Format ist ein in der jeweiligen Anwendung übliches Format und kann für Flugversuchs-Anwendungen ein sogenanntes NRZL (No-return-to-zero-level) oder ein Biphase-Format sein. Die Daten werden über die Datenleitung 55a mit der dazugehörigen Clock über die Zeitsignal- oder Clock-Leitung 55b in einem standardisierten Code übertragen, insbesondere in einem technisch bedingten Übertragungs-Code wie dem PCM-Code, der zur Gewährleistung einer späteren Aufbereitung der Datenübertragung notwendig ist. Die folgende Beschreibung bezieht sich auf die Verwendung des PCM-Codes.

Der Controller 51 schickt die über die Datenstrecke 55a empfangenen Daten im PCM-Code und in 1024 Bit-Blöcken abwechselnd an die Speicher 52 und Speicher 53. Ist ein Daten-Block im Speicher 52 vollständig, wird automatisch auf den Speicher 53 umgeschaltet.Solange der Speicher 53 Daten sammelt, wird als erstes vom Framer 54 ein Identifikationswort, vorzugsweise ein 32 Bit-Identifikationswort erzeugt und seriell über die Leitung 54b an das Modem 6 abgegeben. Anschließend wird der Inhalt aus dem Speicher 52 über den Controller 51 bitweise an den Framer 54 übergeben, der diese wiederum an das Modem 6 weiterleitet. Diese Abgabe wird durch die über die Leitung 54c geschickten Zeitimpulse vom Modem 6 gesteuert. Der nun entstandene Datenblock (Framerblock), bestehend aus einem 32 Bit-Identifikationswort und einem Datensatz in der Größe eines FIFO-Blocks (beispielsweise 1024 Bit), wird nun blockweise vom nachgeschalteten ersten Modem 6 an das ISDN-Netz 7abgegeben.Der Controller 51 wartet nun bis der Speicher 53 vollständig gefüllt ist und beginnt danach mit demselben Ablauf wie es mit Speicher 52 beschrieben wurde.

Der optional im erfindungsgemäßen Konverter 5 vorgesehene Simulator 56 ist eine Testeinrichtung zur Überprüfung des Installationszustands des Datentransfers zwischen der ersten 4 und der zweiten 10 Bodenstation. Diese Testeinrichtung kann jederzeit durch das Umschalten des Controllers 51 auf den Simulator 56 aktiviert werden, d.h. die am Eingang 55a anliegenden PCM-Daten sind während dieser Umschaltzeit unterbrochen. Der Simulator 56 sendet dann Quasi-Telemetriedaten an die Steuereinheit 51, die diese Daten mittels des ersten Speichers 52 und des zweiten Speichers 53 in Blöcke teilt und über die Leitung 54a an der Framer 54 schickt. Der Simulator arbeitet mit der durch den Teiler 57 halbierten, vom Modem 6 über die Leitung 54c gelieferten und der für den Framer 54 maßgeblichen Clock-Rate. Mit Hilfe dieser Testeinrichtung kann die komplette Übertragungseinrichtung unabhängig von der Einspeisung externer Daten schnellstens überprüft werden.

Der Re-Konverter 12 umfaßt einen Controller oder eine Steuereinheit 61, über die Datenleitung 61a Daten und über eine Zeitsignalleitung 61 b, die ein kontinuierliches Zeitsignal bezw. eine Clock-Rate vom zweiten Modem 11 empfängt. Am Controller 61 ist eine Speichereinheit oder ein Speicher 62, die bzw. der als FIFO ausgestaltet ist, über zumindest eine Daten- und Kontrolleitung 62a zum Transfer von Daten aus dem Controller 61 an den Speicher 62 angekoppelt. Weiterhin ist an den Controller 61 eine Phase-Lock-Loop-Schaltung oder PLL-Schaltung 63 über eine Verbindung 63a verkoppelt. An dem Controller 61 ist über eine entsprechende Leitung 64a, eine Simulator-Erkennung 64 zur Erkennung der vom Simulator 56 des Konverters 5 geschickten Daten, angeschlossen.

Das erste Modem 6 schickt in dem dafür vorgesehen Format Daten über die Standard-Übertragungsleitung 7 an das zweite Modem 11 der zweiten Bodenstation 10. Nach diesem Modem 11 werden Daten über die Datenleitung 61a und parallel über die Zeitsignal-Leitung 61b die Taktdaten vom Modem 11an den Controller 61 geschickt. Der Re-Konverter 12 wandelt das Format der von zweitem Modem 11 kommenden Daten wiederum in das gewünschte Standard-Telemetrie-Format, also zum Beispiel das serielle PCM-Format um. Hierzu spaltet der Controller 61 das Identifikationswort von dem eigentlichen Daten-Block ab und führt es über die Transfer-Leitung 62a dem Speicher 62 zur Zwischenspeicherung zu. Durch die Erkennung des Synchronisations-Impulses im Controller 61 wird ein Steuer-Signal erzeugt, das über die Verbindung 63a in der PLL-Schaltung 63 ein Triggersignal (Clock) erstellt. Dieses Tiggersignal mit der vorgegebenen Clock-Frequenz in der PLL-Schaltung muß dasselbe wie das am Einspeisepunkt, also der Leitung 55b des Konverters 5 sein. Das heißt, das Triggersignal aus dem Controller 61 synchronisiert den Takt der PLL-Schaltung 63. Dieser Takt ist somit 1024 mal schneller als der Takt des Steuersignales aus dem Controller 61. Der so erzeugte Takt wid nun zum Auslesen des Speichers 62 verwendet. Mit dieser Anordnung aus Controller 61, Speicher 62, PLL-Schaltung 63 wird wieder ein lückenloser Datenstrom erstellt, der als Rekonverter-Output zur Weiterverarbeitung in der zentralen Bodenstation zur Verfügung steht.

Die optional dem Controller 61 zugeschaltete Simulator-Erkennung 64 empfängt die Testsignale bzw. Testdaten, die in der Test-Betriebsart von dem Simulator 56 über die Standard-Übertragungsleitung 7 gesendet worden sind. Da der Simulator 56 nur vorbestimmte Daten-Formate, die inhaltlich auch noch vorbekannt sind, an den Simulator-Erkennung 64 gesendet hat, ist diese in der Lage, das simulierte Signal zu bestätigen und zu erkennen. Der Simulator 56 im Zusammenspiel mit der Simulator-Erkennung 64 gewährleistet dadurch eine Selbsttest-Funktion.

## Patentansprüche

1. Vorrichtung zur Übertragung von synchron getakteten Telemetrie-Daten von einem Empfangs-System (3) einer ersten Bodenstation (4) mit einem Konverter (5) und einem ersten Modem (6) über eine Standard-Übertragungsleitung mit asynchroner Datenübertragung zu einer zweiten Bodenstation (10, 30) mit einem zweiten Modem (11) und einem Re-Konverter (12) zur Re-Konvertierung der asynchronen Daten in synchron getaktete Daten,
wobei dem Konverter (5) die Telemetrie-Daten zusammen mit zugehörigen Zeitsignalen über eine Zeitsignal-Leitung (55b) zugeführt wird,
wobei der Konverter (5) zur Konvertierung synchron getakteter Daten in ein für das Standard-Übertragungssystem erforderliches Schnittstellen-Format einen Controller (51), der die empfangenen synchron getakteten Daten wechselweise zwei Speichern (52,53) zuführt, um von diesen die Daten blockweise formatiert zurückzuerhalten, und einen diesem zugeordneten Framer (54) aufweist, der die Datenblöcke mit jeweils einem Identifikations-Wort versieht und die Blöcke aufgrund der Zeitsignale des ersten Modems (6) an dieses zur Übertragung über die Standard-Übertragungsleitungen (7) sendet,
wobei der Re-Konverter (12) die vom Framer (54) gesendeten Datenblöcke mittels eines zugeordneten Speichers (62) zwischenspeichert und einen Controller (61) umfaßt, der ein dem Zeitsignal der Zeitsignal-Leitung (55b) entsprechendes Triggersignal an eine zugeordnete PLL-Schaltung (63) zur Kontrolle ihres Taktes sendet, durch den das Auslesen der Daten aus dem Speicher (62) zum zweiten Modem bestimmt wird,
wobei die PLL-Schaltung (63) aus den Daten-Blöcken wiederum ein kontinuierliches Signal bildet, um diese dann zusammen mit einem Taktsignal über eine Leitung (63d) an ein Auswertesystem (9) zu senden.

2. Vorrichtung zur Übertragung von synchron getakteten Daten über Standard-Übertragungsleitungen mit asynchroner Datenübertragung nach dem Anspruch 1, **dadurch gekennzeichnet, daß** das Identifikationswort ein 32-Bit-Wort ist.

3. Vorrichtung zur Übertragung von synchron getakteten Daten über Standard-Übertragungsleitungen mit asynchroner Datenübertragung nach einem der voranstehenden Ansprüche, **dadurch gekennzeichnet, daß** die im Controller (51) erzeugten Blöcke sowie die vom Controller (61) empfangenen Blöcke 1024 Bit-Blöcke sind.

4. Vorrichtung zur Übertragung von synchron getakteten Daten über Standard-Übertragungsleitungen mit asynchroner Datenübertragung nach einem der voranstehenden Ansprüche, **dadurch gekennzeichnet, daß** das erste Modem (6) ein X.21-Modem ist.

5. Vorrichtung zur Übertragung von synchron getakteten Daten über Standard-Übertragungsleitungen mit asynchroner Datenübertragung nach einem der voranstehenden Ansprüche, **dadurch gekennzeichnet, daß** der Converter (5) einen Simulator (56) aufweist, der vorbekannte Daten in einem vorbestimmten Format an den Controller (51) sendet, um diese dann über die Standard-Datenübertragungsleitung (7) und das zweite Modem (11) an den Re-Konverter (12) zu senden, wobei der Re-Konverter (12) eine Simulator-Erkennung (64) zugeordnet ist, der die vom Simulator (56) gesendeten Blöcke sammelt und überprüft, ob diese richtig übertragen worden sind.

## Claims

1. Apparatus for transmission of synchronously-clocked telemetry data from a receiving system (3) of a first ground station (4) with a converter (5) and a first modem (6) via a standard transmission line by asynchronous data transmission to a second ground station (10, 30) with a second modem (11) and a reconverter (12) for reconversion of the asynchronous data to synchronously-clocked data,
wherein the converter (5) is supplied with the telemetry data together with associated time signals via a time-signal line (55b),
wherein, for conversion of synchronously clocked data to an interface format which is required for the standard transmission system, the converter (5) has a controller (51) which supplies the received synchronously-clocked data alternately to two memories (52, 53) in order to receive the data back therefrom formatted in blocks, and has a framer (54), which is associated therewith, provides the data blocks with a respective identification word, and sends the blocks, on the basis of the time signals of the first modem (6) thereto for transmission via the standard transmission lines (7),
wherein the reconverter (12) uses an associated memory (62) to buffer-store the data blocks sent by the framer (54), and has a controller (61) which sends a trigger signal, which corresponds to the time signal of the time-signal line (55b), to an associated PLL circuit (63) in order to control its clock, by means of which controller the data is read from the memory (62) to the second modem,
wherein the PLL circuit (63) in turn forms a continuous signal from the data blocks in order to send it together with a clock signal via a line (63d) to an evaluation system (9).

2. Apparatus for transmission of synchronously-clocked data via standard transmission lines by asynchronous data transmission according to Claim 1, **characterized in that** the identification word is a 32-bit word.

3. Apparatus for transmission of synchronously-clocked data via standard transmission lines by asynchronous data transmission according to one of the preceding claims, **characterized in that** the blocks produced in the controller (51) as well as the blocks received by the controller (61) are 1024-bit blocks.

4. Apparatus for transmission of synchronously-clocked data via standard transmission lines by asynchronous data transmission according to one of the preceding claims, **characterized in that** the first modem (6) is an X.21 modem.

5. Apparatus for transmission of synchronously-clocked data via standard transmission lines by asynchronous data transmission according to one of the preceding claims, **characterized in that** the converter (5) has a simulator (56) which sends already known data in a predetermined format to the controller (51), in order to then send this data via the standard data transmission line (7) and the second modem (11) to the reconverter (12), wherein the reconverter (12) is allocated a simulator identification (64) which collects the blocks sent by the simulator (56) and checks whether they have been correctly transmitted.

## Revendications

1. Dispositif de transmission de données de télémétrie à cadencement synchrone par un système de réception (3) d'une première station terrestre (4) comprenant un convertisseur (5) et un premier modem (6) par le biais d'une ligne de transmission standard à transmission de données asynchrone vers une deuxième station terrestre (10, 30) comprenant un deuxième modem (11) et un reconvertisseur (12) pour reconvertir les données asynchrones en données à cadencement synchrone, les données de télémétrie étant acheminées au convertisseur (5) conjointement avec des signaux de temps correspondants par le biais d'une ligne de signal de temps (55b),
le convertisseur (5) présentant, pour convertir les données à cadencement synchrone en un format d'interface nécessaire pour le système de transmission standard, un contrôleur (51) qui achemine les données à cadencement synchrone reçues en alternance à deux mémoires (52, 53) afin de récupérer auprès de celles-ci les données formatées en blocs et un trameur (54) associé à ce contrôleur, lequel trameur munit les blocs de données à chaque fois d'un mot d'identification et envoie les blocs au premier modem (6) en se basant sur le signal de temps de celui-ci en vue de leur transmission par le biais des lignes de transmission standard (7),
le reconvertisseur (12) mémorisant temporairement les blocs de données envoyés par le trameur (54) au moyen d'une mémoire (62) associée et comprenant un contrôleur (61) qui envoie un signal de déclenchement correspondant au signal de temps de la ligne de signal de temps (55b) à un circuit PLL (63) associé pour contrôler son horloge, par laquelle est déterminée la lecture des données depuis la mémoire (62) vers le deuxième modem,
le circuit PLL (63) formant de nouveau un signal continu à partir des blocs de données afin d'envoyer ensuite celui-ci, conjointement avec un signal d'horloge par le biais d'une ligne (63d), à un système d'interprétation (9).

2. Dispositif de transmission de données à cadencement synchrone par le biais de lignes de transmission standard à transmission de données asynchrone selon la revendication 1, **caractérisé en ce que** le mot d'identification est un mot de 32 bits.

3. Dispositif de transmission de données à cadencement synchrone par le biais de lignes de transmission standard à transmission de données asynchrone selon l'une des revendications précédentes, **caractérisé en ce que** les blocs générés dans le contrôleur (51) ainsi que les blocs reçus par le contrôleur (61) sont des blocs de 1024 bits.

4. Dispositif de transmission de données à cadencement synchrone par le biais de lignes de transmission standard à transmission de données asynchrone selon l'une des revendications précédentes, **caractérisé en ce que** le premier modem (6) est un modem X.21.

5. Dispositif de transmission de données à cadencement synchrone par le biais de lignes de transmission standard à transmission de données asynchrone selon l'une des revendications précédentes, **caractérisé en ce que** le convertisseur (5) présente un simulateur (56) qui envoie au contrôleur (51) des données connues à l'avance dans un format prédéfini afin d'envoyer ensuite celles-ci au reconvertisseur (12) par le biais de la ligne de transmission de données standard (7) et du deuxième modem (11), un détecteur de simulateur (64) étant associé au reconvertisseur (12), lequel collecte les blocs envoyés par le simulateur (56) et vérifie s'ils ont été transmis en toute conformité.
